# EUROPEAN PATENT APPLICATION

(11) **EP 0 550 941 A1**
(43) Date of publication of application: **14.07.1993**
(21) Application number: 92300106.9
(22) Date of filing: 07.01.1992
(51) Int. Cl.: F16J 15/56

(54) **Stem seal assembly**

(71) Applicant: Cooper Cameron Corporation, Houston, Texas 77027 (US)
(72) Inventor: Gill, David, Otley, West Yorkshire LS21 3LY (GB)
(74) Representative: Jackson, Peter Arthur

(57) **Abstract**

A seal assembly has a two part housing (10,11) containing a sealing element (21) with flanges (23) which extend radially inwardly with an axial inclination for engagement with a sliding stem (26). The sealing element can be axially compressed between tapered seatings (14 and 17), upon tightening the housing sections axially together by means of bolts (18), whereby the ends of the sealing element are deformed radially inwardly to pre-energise the sealing engagement between the flanges and stem.

## Description

The invention relates to a seal assembly, which is arranged to provide a seal around a relatively axially movable metallic stem, such as a stem of a valve or of an hydraulic actuator, to prevent loss of fluid pressure via the seal/stem interface.

In known seal assemblies of this kind, it is not unusual to find a deformable lip or flange of a sealing element which is stressed by the fluid pressure to be contained, so that it is urged into tighter engagement with the stem. However, a difficulty with relying on the fluid pressure to energise the seal is that unless firm engagement with the stem is obtained before the fluid pressure to be contained is applied, the fluid may take the path of least resistance along the seal/stem interface and fail to stress the flange or lip of the sealing element. On the other hand, if firm engagement is effected with the stem before the fluid pressure is applied, this may provide a high resistance to assembly of the sealing element on and along the stem to its position of use, at least unless very accurate tolerances are achieved.

In accordance with the present invention, a seal assembly, which is arranged to provide a seal around a relatively axially movable metallic stem, comprises a tubular housing which is arranged to surround the stem and which is formed in two axially offset sections; means for tightening the housing sections axially towards one another; and, within the housing, an annular metallic sealing element which is formed with a plurality of axially spaced annular flanges projecting radially inwardly but with an axial inclination for sealing engagement by the radially inner edges of the flanges with the stem, at least two of the flanges adjacent to one end of the element being axially inclined towards that one end, and a radially outer surface of the element adjacent to the one end being tapered in the axial direction towards that one end and engaging a seating of one section of the housing so that when the housing sections are tightened axially towards one another, the sealing element is axially compressed and at least the one end of the element is deformed radially inwardly.

With this arrangement, the assembly is fitted to a stem with the sections of the housings untightened together and with the sealing elements substantially unstressed, so that provided that the radially inner edges of the flanges have been machined to provide little or no interference fit with the stem, assembly is without difficulty. However, when the sealing assembly has reached its working axial position along the stem, the sections of the housing are tightened up, by means of retaining bolts or other locking mechanisms, so that they are urged axially towards one another, thus providing both an axial, and via the tapered seating, a radial force, to the one end of the sealing element. The radial inward deformation of the sealing element which results, forces the flanges radially inwardly and brings the radially inner edges of the flanges into firm engagement with the stem to pre-energise the seal prior to the application of fluid pressure at that end of the sealing assembly, which will further work to stress and deform the flanges at that end of the assembly into even firmer engagement with the stem. If the seal is still not sufficiently energised, further inward deformation of the one end of the sealing element, and the flanges carried at the end of the sealing element, can be achieved by further tightening up the sections of the housing. In this way compensation for wear can be accommodated. The tightening also creates a metal to metal static seal between the tapered surface on the sealing element and the housing seating. The fact that there are at least two flanges at the one end of the sealing element, inclined towards the respective end of the element, ensures that if the end flange is distorted, for example by pressure overload, the applied force from the fluid pressure is redistributed to the next inner flange, maintaining the overall seal. In addition, under normal operating conditions the greater part of the radially-generated force is distributed through the end flange to effect the principal seal. During the life of the seal, wear will probably occur, and this wear is greatest at the end flange. As wear takes place, and material is lost from the end flange, the effectiveness of the seal can be ensured by additional tightening of the housing sections. However, as this material is lost from the end flange, the radially-generated force is redistributed towards the second flange, thus automatically compensating for the wear of the first flange. The use of such seals in tandem thus increases the life and reliability of the seal.

Although the flanges, extending radially inwardly and inclined axially, may be arcuate, they are both simply, from a machining point of view, substantially frustoconical.

Preferably, a radially outer surface of the element adjacent to the other end of thereof is similarly tapered in the axial direction but towards the other end and engages a respective seating of the other section of the housing. In this construction, when the two housing sections are tightened axially towards one another, both ends of the sealing element are deformed radially inwardly to pre-energise annular flanges at both ends of the element.

The tapers at both ends of the element may be substantially concentrically part spherical, and when the seatings provide substantially the only support for the element in the housing, the assembly may approximate to a balljoint, so that the sealing element is given a degree of self-alignment with the stem before the housing sections are tightened up to rigidify the sealing element with the housing.

Alternatively, the taper(s) and seating(s) may be substantially frustoconical and a slight taper mismatch may be used to control the distribution of force at the or each seating.

If fluid pressure is to be contained in both directions along the stem, a back-to-back arrangement can be achieved by providing at least two of the flanges adjacent to the other end of the element axially inclined towards that other end, provided that the radially outer surfaces at both ends of the element engage respective tapered seatings in respective ones of the housing sections. Upon tightening up of the housing sections, both ends of the element will be deformed radially inwardly to pre-energise the seals and the flanges at either end will be additionally energised by fluid pressure when applied at the appropriate end of the assembly.

The spaces between the flanges may be filled with a dry lubricant, such as graphite, or with a grease, or with an elastomer, to augment sealing. The use of an elastomer in this way will enable the seal to operate over a wide pressure range, give minimal friction and a long life. High temperature resistance is accommodated by the metallic nature of the sealing element.

The assembly may be provided with one or more elastomeric O-ring seals between the sealing element and the housing in order to facilitate sealing in the event of possible poor machine finishes.

Some examples of a seal assembly constructed in accordance with the present invention are illustrated in the accompanying drawings in axial section.

Each of the illustrated seal assemblies comprises a housing formed in two sections 10 and 11. The section 10 has a cylindrical wall 12 formed integrally at one end with a radially inwardly extending flange 13 formed with a seating 14. The second section 11 consists of an annular body 15 formed with an axial extension 16 which is guided within one end of the cylindrical wall 12 of the first section, and is provided with a seating 17 similar to the seating 14. The two sections can be tightened axially towards one another by a ring of bolts 18, each of which passes through a respective hole 19 in the body 15, and is screwed into a tapped hole 20 in the wall 12.

Within the housing 10,11 is a metallic sealing element 21 formed by a generally cylindrical body 22 formed integrally with four radially inwardly extending frustoconical flanges 23. At each end, the radially outer end surfaces 24 and 25 of the body 22 are tapered and engage the tapered seatings 14 and 17 respectively. The radially inner edges of the flanges 23 are arranged to seal against the external surface of a stem 26, which is expected to stroke to and fro as indicated by the arrows 27. The spaces between the flanges are optionally filled with a lubricant or elastomer 28.

The radially inner edges of the flanges 23 are initially machined so that with the sealing element 21 unstressed, the element can be offered around and moved axially relatively to the stem 26 without any significant interference between the flanges and stem. With the element situated axially in its position of use, the bolts 18 are tightened to tighten the housing sections 10 and 11 axially together, and consequently, by virtue of the engagement between the surfaces 24 and 25, and the respective seatings 14 and 17, to deform the ends of the sealing element radially inwardly to force the radially inner edges of at least the end flanges against the stem, and pre-energise the seal.

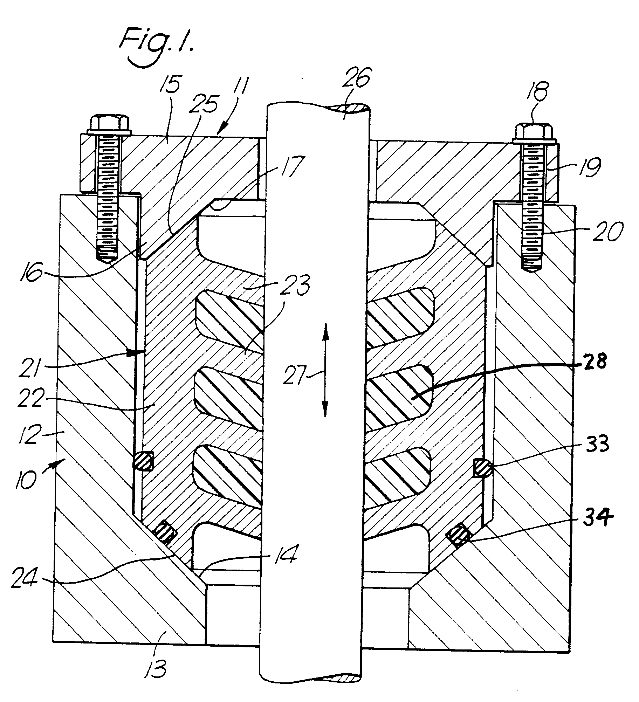

In the Figure 1 example, the seatings 14 and 17 are frustoconical and all the flanges 23 are inclined axially downwardly as seen in Figure 1, so that upon successive wear of the flanges, all the flanges may successively be stressed further to maintain the integrity of the seal by the application of fluid pressure along the stem from below as seen in Figure 1. This thus provides a uni-directional sealing assembly which seals against flow along the stem in the upward direction.

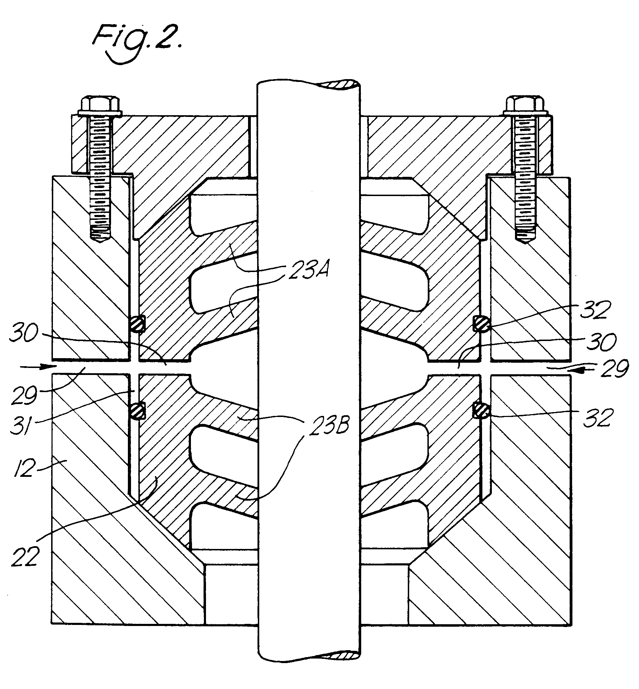

Figure 2 differs from Figure 1 in that it is bi-directional, the upper two flanges 23A being inclined axially upwardly as seen in Figure 2, whereas the lower two flanges 23B are inclined downwardly. The upper two flanges will therefore be effective to energise the seal by the application of fluid pressure downwardly along the stem from above as seen in Figure 2, whereas the lower two flanges 23B will act as the flanges 23 in Figure 1 to seal against upward flow of fluid along the stem.

Figure 2 also shows a modification in which there are one or more radial bores 29,30 through the housing section 12 and element body 22, and communicating with an annular chamber 31 between the housing section 12 and element 22, delimited by O-ring seals 32. The bores 30, lead into the space between the two middle flanges 23.

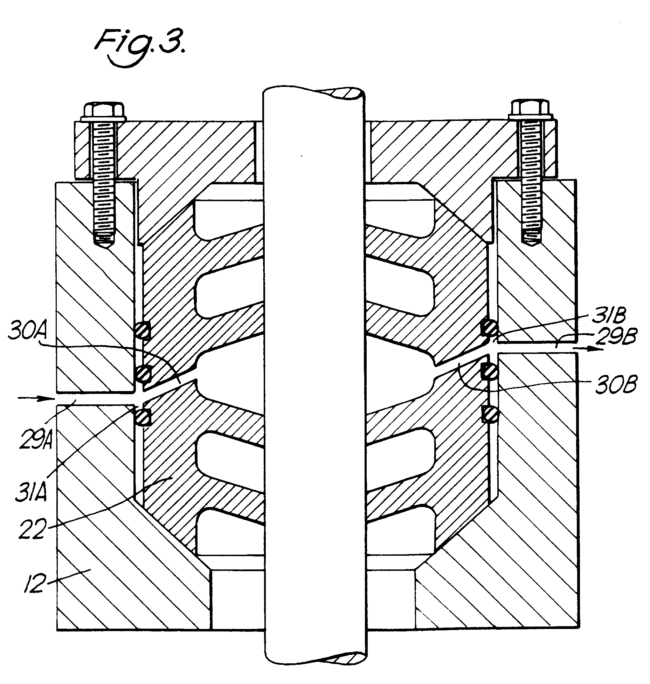

Figure 3 shows a further modification of Figure 2, in which bores 29A and 29B through the housing section 12, communicate with bores 30A and 30B through the element body via separately isolated chambers 31A and 31B. These bores and chambers shown in Figures 2 and 3 provide a facility for the injection of either a lubricant or of a cleansing fluid to purge the seal of contamination; or for the circulation of a coolant fluid.

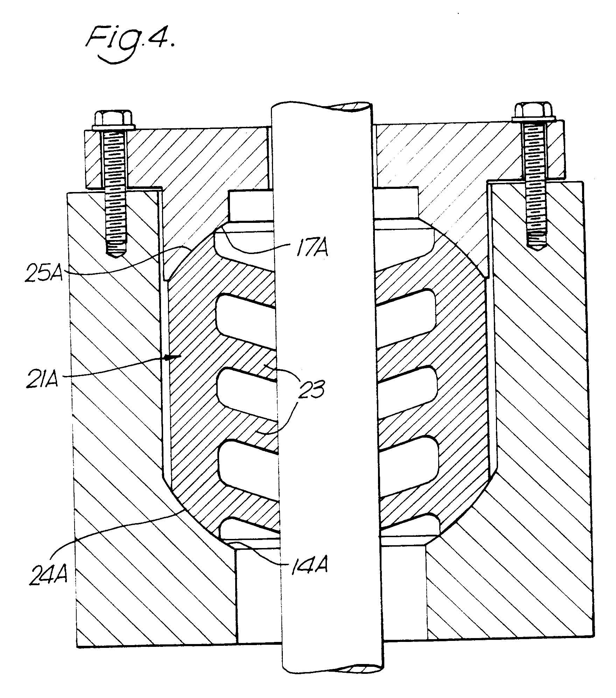

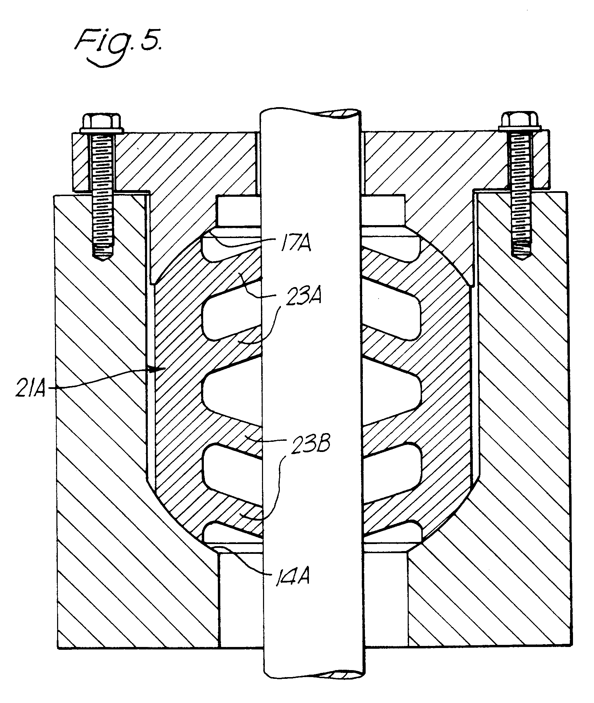

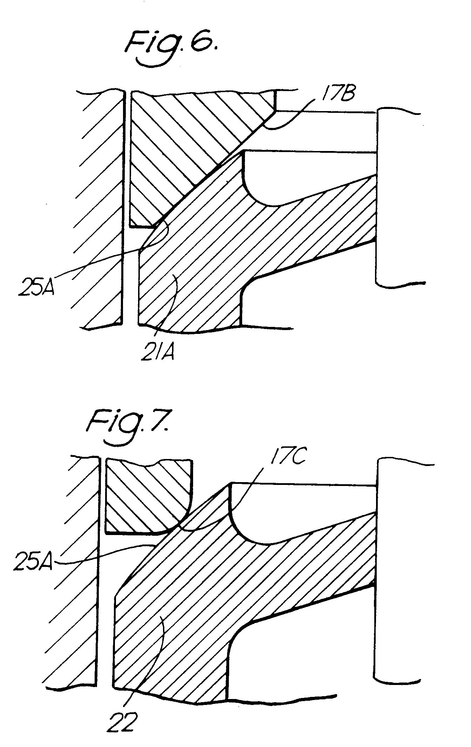

Figures 4 and 5 correspond to Figures 1 and 2 in respect of being uni- and bi-directional seals. However they differ from the Figures 1 and 2 examples in that the seatings 14A and 17A, and the complementary tapered surfaces 24A and 25A of the sealing element, are part spherical all with a common centre. Since the sealing element is supported in the housing substantially only by the seatings 14A and 17A, the sealing element can rotate in the housing to allow a degree of self-alignment between the sealing element 21A and the stem, before the bolts 18 are fully tightened up. In order to provide this effect, it is not necessary for the seatings 14A,17A to be part spherical, provided that they are circularly symmetrical about the shaft axis, and the tapered surfaces 24A and 25A are part symmetrical. Such alternatives are shown in Figure 7 and 8, in which the part spherical surface 25A engages a substantially frustoconical seating 17B, or an axially short convex seating 17C, respectively. The narrow band contact in Figure 7 can ensure the optimum positioning of the point of application of the axial/radial pre-energisation force - should this be important.

The various modifications illustrated may be used in any combination, consistent with compatibility.

It may be desirable to provide elastomeric O-ring seals between the sealing element and housing, and two possible positions for such seals are shown at 33 and 34 in Figure 1.

## Claims

1. A seal assembly, which is arranged to provide a seal around a relatively axially movable metallic stem (26), the assembly comprising a tubular housing which is arranged to surround the stem and which is formed in two axially offset sections (10,11); means (18) for tightening the housing sections axially towards one another; and, within the housing, an annular metallic sealing element (21) which is formed with a plurality of axially spaced annular flanges (23) projecting radially inwardly but with an axial inclination for sealing engagement by the radially inner edges of the flanges with the stem, at least two of the flanges adjacent to one end of the element being axially inclined towards that one end, and a radially outer surface (24) of the element adjacent to the one end being tapered in the axial direction towards that one end and engaging a seating (14) of one section of the housing so that when the housing sections are tightened axially towards one another, the sealing element is axially compressed and at least the one end of the element is deformed radially inwardly.

2. An assembly according to claim 1, in which the flanges (23) are substantially frustoconical.

3. An assembly according to any one of the preceding claims, in which a radially outer surface (25) of the element adjacent to the other end thereof is similarly tapered in the axial direction towards that other end and engages a respective seating (17) of the other section of the housing.

4. An assembly according to claim 3, in which the tapers (24A,25A) are substantially concentrically part spherical (Figs. 4,5).

5. An assembly according to claim 4, in which the seatings (14,17) provide substantially the only support for the element in the housing.

6. An assembly according to any on of claims 1 to 3, in which the tapers (24,25) are substantially frustoconical (Figs. 1,2).

7. An assembly according at least to claim 3, in which at least two of the flanges (23A) adjacent to the other end of the element are axially inclined towards that other end.

8. An assembly according to any one of the preceding claims, in which the spaces between the flanges (23) are filled with a lubricant (28).

9. An assembly according to any one of claims 1 to 7, in which the spaces between the flanges (23) are filled with an elastomer (28).

10. An assembly according to any one of the preceding claims, in which an elastomeric O-ring seal (33,34) is provided between the sealing element and the housing.
